# EUROPEAN PATENT APPLICATION

(11) **EP 4 183 580 A1**
(43) Date of publication of application: **24.05.2023**
(21) Application number: 21209556.6
(22) Date of filing: 22.11.2021
(51) Int. Cl.: B32B 27/20, B32B 1/00, B32B 3/18, B32B 5/02, B32B 5/26, B32B 7/03, B32B 27/08, B32B 27/12, B32B 27/32

(54) **GROUND IMPACT PLATE FOR A BATTERY ELECTRIC VEHICLE**

(71) Applicant: Autoneum Management AG, 8406 Winterthur (CH)
(72) Inventor: Mazzarella, Luca, 8400 Winterthur (CH); Schürmann, Jeremias, 8005 Zürich (CH)

(57) **Abstract**

Impact plate comprising a sandwich structure consisting of two skin, and a core layer between the skin, all layers laminated to the adjacent layer or layers, and whereby the core layer comprises a viscoelastic matrix, and whereby the core layer has a shore D hardness of below 62, preferably below 57 as measured according Norm ASTM D2240.

## Description

### Technical Field

The invention relates to Impact plate for a battery electric vehicle and a method of producing such impact plate.

### Background Art

Battery electric vehicles, solely driving electric, have larger battery packs, integrated into the vehicle body structure. Two main design concepts are now common in the field:
- The T-architecture, whereby the battery modules are arranged along the tunnel and in the area of the rear axle under the passenger seat,
- The floor architecture, whereby the battery pack is placed underneath the passenger floor, thereby lowering the ground clearances.

Both design solutions have their pros and cons related to front and side impact incidences, but both may be equally prone to mayor damage due to ground impact. Ground impact can lead to severe damage of the battery packs or cells, causing short cuts and electric life threatening fires for the passengers of the car. Something that carmakers like to prevent.

Impact can occur when the lower surface of the car hits a large obstacle, like a stone, a curb stone, a sidewalk, or a bollard or falls into a pothole.

The most problematic are impact of objects that are larger than the clearance underneath the vehicle, in principle larger than the radius of the wheel. In particular, objects may be dragged up and penetrate the lower surface of the car, as it is lodging between the ground and the car surface. In addition, cars hit by raising bollards are falling within the category of ground impact.

In all these cases, the immediate impact might not be fast but severe. In the worst case, sharp edges might penetrate the lower surfaces of the car; in particular, of the battery case, and reach within the battery pack, impairing the integrity of the battery cells or packs the cooling system or the electronics.

In such a case, the lower panel of the battery box meeting the obstruction must be able to prevent any puncture or deformation of the battery system within. Otherwise, such an action might cause a quick fire.

In a special case, the damage on the protected surface might not occur from the impacting object but may be caused by sharp edges of the cladding or coverings damaged by the impact.

State of the art solutions are either bulky and need more space than is available and/or are heavy, increasing the weight of the car and hence its CO₂ footprint. For instance, the battery boxes may have double floor construction with thick aluminium underneath the battery box, increasing the stiffness of the layer that would be in contact with the obstruction. In most cases, this is an aluminium plate with a thickness between 2.5-6mm, eventually with additional ribbing and a space between the first impacting surface and the surface of the actual battery box. Although it is safe, it increases the overall weight of the vehicle, this can be in the range of 8kg/m² - 16 kg/m² extra weight. Hence, increasing the fuel use of the car and the CO₂ emission.

There is a need for an alternative impact plate with a reduced weight but the same safety standard as a thick aluminium plate. In particular, for the area directly underneath the battery location, but also for areas just before or after that might be prone to impact as well.

It is the goal, to provide for an impact plate that is lightweight and able to withstand ground impact events as described previously. Although the impact plate might be sacrificial, it should at least withstand the impact without a breakthrough that reaches the lower surface of the battery case with enough energy to damage the battery case and reach the battery cells. As this would cause a hazardous situation.

### Summary of the invention

The object is achieved with an impact plate comprising a sandwich structure consisting of two skins, and a core layer between the skins, all layers laminated to the adjacent layer or layers as defined in claim 1.

In particular, with a core layer comprising a viscoelastic matrix, it is possible to create an energy-absorbing layer that is able to bounce back to, or close to, its original position. To achieve this effect the core layer has a shore D hardness of below 62, preferably below 57 as measured according Norm ASTM D2240. Preferably, the shore D hardness is in the range of between 45 and 57. Surprisingly a sandwich structure with 2 skin and a core layer according to the invention not only bounces back to the original form after a severe impact but is also able to prevent cracking of the skin impacted or even the opposite or back skin. Working as a 3-layer springboard upon impact.

The following preferred solutions enhance the overall effect of absorbing any impact energy and the bounce back of the layers to their initial position without large deformation and/or cracks.

The viscoelastic matrix may comprise a polyolefin, preferably at least one of a polypropylene, an olefin based elastomer which can include any of the following; thermoplastic polyolefin elastomer (POE), Ethylene-vinyl acetate (EVA), ethylene propylene diene monomer (EPDM), ethylene butyl acrylate (EBA) or thermoplastic polyolefin TPO.

Preferably, the viscoelastic matrix comprises a polyolefin, and at least one of a Thermoplastic polyolefin (TPO) and a filler.

The TPO may comprise of at least a partially amorphous polyolefin, preferably an amorphous poly-alpha-olefin (APAO).

The TPO is preferably a thermoplastic elastomer with a density below 0.885 kg/m³, preferably not more than 0.875 kg/m³, preferably the TPO has a specific density of between 0.875-0.870 kg/dm³.

At least one of the polyolefin polymers of the core layer is produced with metallocen catalyst technology.

According to the definitions proposed by the American Society for Testing and Materials (ASTM-D-883), a filler is a relatively inert material added to a plastic to modify its strength, permanence, working properties, or other qualities, or to lower costs. In contrast, according to ASTM-D-883, a reinforced plastic is defined as one with some strength properties greatly superior to those of the base resin, resulting from the presence of high-strength fillers imbedded in the composite. The reinforcing fillers are usually fibers, fabrics, or mats made of fibers. Reinforcement fillers like long cut glass fibers, fiber mats or fabrics or endless filament would render the core layer to stiff and prevent a good impact absorption and bounce back.

Hence, preferable non-reinforcement fillers or weak reinforcement fillers are used for the core layer. The fillers main function is to replace material that is more expensive and to keep the cost price low while maintaining the properties.

The filler may be a weak reinforcing filler, a non-reinforcing filler, or a mixture of both.

For instance, the non-reinforcement filler could be at least one of Talcum, BaCO₃, CaCO₃, silica or carbon black. While weak reinforcing filler may comprise at least one of short glass fibers, short carbon fibers, mica platelets, short basalt fibers, short aramid fibers.

In one specific embodiment, the core layer is not containing any fiber as filler.

Impact plate according to one of the preceding claims whereby the core layer may comprise up to 85% of filler. Depending on the stiffness of the skins and the filler material chosen, the core layer may comprise from a low amount of filler, around 15%, or up to a high level of fillers, around 80%.

The impact plate functions can be attributed to the synergistic effect the combination of the skins and the core layer.

The core layer may have a tangent delta onset at a temperature of between -65°C and -15°C, as measured by DMTA according to the ISO 6721-4.

The impact plate according to the invention with the preferred embodiments as given create a sandwich construction that is not only stiff, but also able to withstand sudden impact by dissipating the energy in the plane of the core layer. Surprisingly the layer is not only dissipating the impact energy but also distributing the energy over a larger surface thereby reducing the peak of the impact, minimising the risk of a breakthrough as well as reducing the impact energy left in case of a breakthrough. Surprisingly a core comprising viscoelastic matrix is also able to push back the impacted skin, during the impact and prevents breaking or cracking of the impacted skin layer as well as the skin layer on the back side of the sandwich

A skin comprises of at least one layer of a fiber-reinforced plastic composite material.

The fiber-reinforced plastic composite material comprises a resin material with embedded reinforcing fibers.

The resin material comprises a thermoplastic resin selected from the group consisting of polypropylene (PP), polyamide (PA), polybutylene terephthalate (PBT), polycarbonate (PC), and polyethylene terephthalate (PET), and TPO or TPU, or a thermosetting resin selected from the group consisting of unsaturated polyester (UP), epoxy, and polyurethane (PU).

The embedded fibre material may be endless filaments or long staple fiber. The embedded fibrous material may be cut staple fibres or endless filaments. The term "fibers" define both "cut staple fibers" and "endless filaments".

The fibers may be in random order, or aligned in a monoaxial, biaxial or multiaxial direction. Preferably, the fibers are arranged in a specified direction or combination of directions to increase the stiffness of the skin layer. Preferably, the fibers or filaments are substantially parallel to each other in a monoaxial direction within one layer, and multiple layers are stacked with a different direction between the adjacent layers, to increase the stiffness in all directions of the skin.

The skin may comprise multiple layers of polymer matrix with embedded reinforcement fibers, whereby the axial direction may very between the layers to obtain a multiaxial direction over the full skin. Alternatively, knitted, woven or nonwoven fabrics or veils are embedded in the resin to form the fiber-reinforced plastic composite material.

The production process may be simplified when using pre laid ribbons or fabrics, known as UD tapes - unidirectional tapes with endless filaments- or Organosheets. In addition, fabrics based on small UD tapes may be used as reinforcement.

Unidirectional fibre-reinforces fabric webs or tapes are made by arranging fibre rovings next to each other, spread out by a special spreading device without defects. Then they are impregnated in a laminating process for instance by means of plastic films or injection moulding the matrix extrudate. The thus formed material can be wound on roll, or cut into sheets for later usage as single layer.

Thus, formed tapes or fabrics can be layered in multiaxial direction to obtain a stiff structure equally stiff in all direction. Alternatively, it can be layered in an aligned direction in such a way to maximize the stiffness in a certain direction, or cab be aligned in a direction that there is a stiffness bias in on direction to adequately counter the foreseen loads. Preferably, the skin comprises of at least 2 to 10 layers of tapes and or fabric.

The reinforcing fibers in the fiber-reinforced plastic composite material comprise at least one selected from the group consisting of glass fiber, carbon fiber, aramid fibers, volcanic fiber, polyethylene and natural fiber.

Preferably, endless or long cut fibers are used. The fiber length for the long cut fibers is at least 5 mm, preferably close to 10mm. The fiber length is the average fiber length as the fibers might be shortened during the production process.

Preferably, the skin comprise at least 60% by volume of fibrous material, preferably at least 70%.

The higher the fibre content, the higher the bending stiffness of the reinforcement layers. However, a balance must be reached between the stiffness needed and the increased brittleness of the layer. A high fiber content may lead to breakage of the layer during an impact event and these breaks may themselves form the source of damage to the underlying structures.

The impact plate for in particular the battery design based on the floor structure is a large mainly flat rectangle plate structure, which may have slight upturning sidewalls on all 4 sides of the structure. Such large structures are prone to warping due to inner tension differences. This may be increased by the use of different layers on the one and the other side of the core layer. Hence, it is preferable to make both skin identical or to counter act any inner tension differences by either design or differences in the layers and or binding of the layers to each other.

However, a tension difference may be used to the advantage by creating a shape that transfers the impact energy to the mounting points at the rim of the part, thereby further increasing the effectiveness of the part. For instance, the full part may be shaped in a U or V shape whereby the lower point is directed to the road, and in the core of the surface to be protected. While the legs are at the mounting points or at the side of the car. In this way a spring is created that is helping to further reduce the impact energy.

The impact plate according to the invention may be produced using hot or cold moulding processes and,-or combined with- a flow moulding process, having at least following process steps
- Pre-produced fibre reinforced plastic composite material layers are layered in a first half of a mould. Preferable at least one layer covering the full surface of the mold, hence the full surface of the part. Preferably more than one layer is used, with a difference in direction of the reinforcing fibers related to the adjacent layer. Creating a multiaxial stack of reinforced plastic composite material, forming the first skin layer. Alternatively, a sheet consisting of multiple layers of reinforced plastic composite material may be used.
- Preferably the skin, or skins, is/ are pre-shaped preferably using a flow moulding process to ensure full embedding of the fibres.
- The viscoelastic matrix material is placed on top of the first skin layer. The core layer comprising the viscoelastic matrix may be mixed and compounded directly before application or may be pre-compounded. The material for the core layer may be extruded on top of the layer either directly, or preferably in the form of a sheet.
- On top of the core layer a second skin layer is placed. This layer is identical to the first skin layer. Preferably it is a mirror image of the laydown done for the first skin layer to balance any internal stress within the part produced.
- The mould is closed and the part formed.

Preferably the impact plate can be further optimised by its design, for instance a design as disclosed in DE102017103654 may be used.

Preferably, the impact plate is designed with a concave or V shape cross section such that the mounting points are higher than the middle of the plate. Preferably, with an offset of between 1 to 2 cm. Such that upon impact the impact energy is not only absorbed by the core layer and the bending energy of the plate but also transferred to the sides of the car - higher level of the car, away from the battery casing.

### Examples

A comparison was made comparing a plate according to the invention, with a 3mm Aluminium plate and a standard SMC plate.

A simple test set up was created whereby a 10kg weight can be dropped on clamped plates to simulate a severe impact with a large stone. The Weight comes down on the 100mm diameter clamped surface of the plate with an impact energy of 135J and an impact speed of around 5.2 m/s.

Plate 1 is a 3mm Aluminium plate, Plate 2 is a SMC plate, Plate 3 is a sandwich plate with a PP-GF D-LFT, and Plate 4 is a sandwich plate according to the invention.

Plate 1 showed a permanent deformed surface and a displacement of the material of at least 8mm. Plate 2 and 3 showed not only a permanent deformed surface, but above all also a broken surface on the non-impacted site. Even more problematic due to the high level of brittleness of the materials used the material is broken in triangular pieces, which form sharp upstanding cutting lines that could be able to pierce into the adjacent material, during the same impact or upon a next impact event.

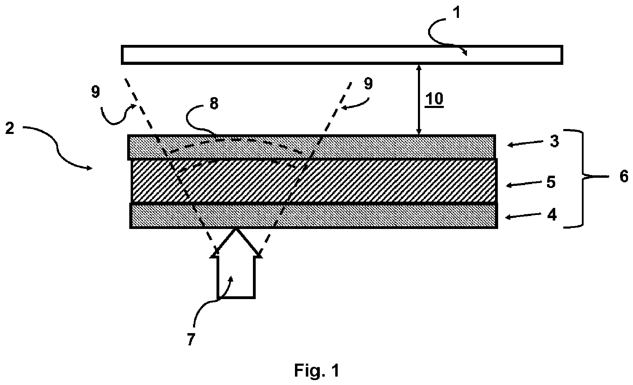

Figure 1 is showing schematically an impact event, with a ground impact plate according to the invention. Base plate 1 is a layer adjacent the ground impact plate with a surface facing the impact plate. Base plate 1 may be for instance the bottom plate of a battery casing or any cladding attached to the battery casing, or more general a surface of a car component that needs protection. This may also be areas just in the front, side or back of the vehicle next or overlapping with battery related technology in need of protection.

The ground impact plate 2 comprises at least a sandwich 6 with two skin 3, 4, and a core layer 5. The core layer 5 comprises of a viscoelastic matrix according to the invention. All layers within the sandwich are bonded or laminated to the adjacent layer or layers to form a sandwich structure.

The first skin layer 4 is directly facing the driving surface like for instance a road or a street, and will be in contact with any object that is higher than the ride height, for instance a stone. Bonded or laminated onto this first skin layer 4 on the surface facing away from the road is a core layer 5. The core layer has in addition on the opposite surface, the second skin layer laminated or bonded to its surface.

The two skin and the core layer form together a sandwich construction 2 with a high bending stiffness, to ensure the panel is not sagging due to gravity, but can uphold its shape, during driving or under different weather conditions. However, the sandwich should not be so stiff that the sandwich become brittle up on impact.

It has been found that an ground impacting object will impact the first skin 4 with an upwards force depicted with arrow 7 and may temporarily dent at least the first skin 4 and the core layer ,thereby transferring impact energy according to transmission lines 9 in a cone shape. In the case of the state of the art impact plates, the impact would be transferred through all layers and breakthrough as indicated with the dotted lines 8.

It was indeed shown, that when a heavy ball was dropped on an impact plate according to the state of the art, optimised in stiffness only, the second stiffness plate facing away from the impact would crack or break, and the first skin layer would stay in a deformed state.

Surprisingly the same test on the sandwich 2 according to the invention, including a viscoelastic layer, showed that the second skin 3 went undamaged, and even more surprising the first skin 4was almost back into its original position. Hence, the material of the sandwich including the viscoelastic core layer was able to absorb almost all the energy and to recover from the displacement, due to the viscoelastic behaviour of the core layer and the reduced stiffness of the outer layers compared to the state of the art.

In the impact plate according to the invention, the impact energy is dispersed over a larger area 7 thanks to the slightly flexible outer layers while being reduced by the core layer, and even in a worst case situation that the impact would break through, it would have a broader but reduced energy level 8 in comparison to the initial impact energy at 7.

The sandwich plate according to the invention is able to absorb the impact energy and to reduce or minimise the impact damage on the base layer or battery housing layer. Preferably, there will be no impact damage at the base layer and or at the second skin layer. It is still foreseen that upon impact it may be necessary to replace the impact plate but the base layer or battery housing is not touched or dented by the impact event, protecting the batteries and preventing a dangerous situation for the passengers.

## Claims

1. Impact plate comprising a sandwich structure consisting of two skins and a core layer between the skins, all layers laminated to the adjacent layer or layers, **characterized in that** the core layer comprises a viscoelastic matrix, and whereby the core layer has a shore D hardness of below 62, preferably below 57 as measured according Norm ASTM D2240

2. Impact plate according to claim 1, whereby the viscoelastic matrix comprises a polyolefin and a filler.

3. Impact plate according to one of the preceding claims, whereby the viscoelastic matrix comprises at least one of a polypropylene, an olefin based elastomer, preferably at least one of thermoplastic polyolefin elastomer (POE), Ethylene-vinyl acetate (EVA), ethylene propylene diene monomer (EPDM) ethylene butyl acrylate (EBA) or thermoplastic polyolefin (TPO).

4. Impact plate according claim 3, whereby the viscoelastic matrix comprises at least one of a TPO and a filler, and whereby the TPO comprises of at least a partially amorphous polyolefin, preferably an amorphous poly-alpha-olefin (APAO).

5. Impact plate according to claim 3 or 4, whereby at least one of the polymers is produced with metallocen catalyst technology.

6. Impact plate according to claim 3 or 4, whereby the TPO is a thermoplastic elastomer with a density below 0.885 kg/m3, preferably not more than 0.875 kg/m3, preferably the TPO has a specific density of between 0.875-0.870 kg/m3.

7. Impact plate according to one of the claims 2 to 5 ,whereby the filler is at least one of a non-reinforcing filler, preferable at least one of talcum, silica, carbon black, BaCO₃ or CaCO₃, or a weak reinforcing filler, preferably one of short glass fibers, short carbon fibers, mica platelets, short basalt fibers or short aramid fibers.

8. Impact plate according to one of the preceding claims whereby the core layer comprises up to 85% by volume of filler.

9. Impact plate according to one of the preceding claims whereby the core layer has a tangent delta onset at a temperature of between -65°C and -15°C, measured by DMTA according to the ISO 6721-4.

10. Impact plate according to one of the preceding claims, whereby the skins comprise a fiber reinforced thermoplastic or duromer layer, preferable in the form of a monoaxial, biaxial or randomised fibers impregnated with a resin.

11. Impact plate according to claim 10, whereby the skin comprises a resin based on polypropylene, polyethylene, polyamide, polyester, TPO, TPU, polyurethane, epoxy or a phenolic resin.

12. Impact plate according to one of the preceding claims, whereby the skins are made of unidirectional (UD) tapes, or organosheet.

13. Impact plate according to one of the preceding claims whereby the sandwich structure has an area weight of between 2000 and 7000 g/m², preferably not more than 5500g/m².

14. Impact plate according to one of the preceding claims, whereby the skins on both sides of the core are identical in composition.

15. Impact plate according to one of the preceding claims whereby the plate is formed in a V or U shape with the rim, preferably including means for mounting, being higher than the middle of the plate.

16. Impact plate according to claim 15, whereby the means for mounting are such that upon impact the plate can move sideways, enough to decrease the distance of the middle of the plate to the adjacent vehicle surface with not more than 2mm.

17. Use of the impact plate according to one of claims 1 to 15, as a skid plate, impact protection plate, light armour plate or underbody plate underneath a vehicle between the road and the surface that needs protection, like a battery casing, electric appliances, or a petrol tank.
